(19) Europäisches Patentamt
European Patent Office
Office européen des brevets

(11) Veröffentlichungsnummer: **0 152 852**
**B1**

(12) **EUROPÄISCHE PATENTSCHRIFT**

(45) Veröffentlichungstag der Patentschrift: **02.01.91**

(21) Anmeldenummer: **85101155.1**

(22) Anmeldetag: **04.02.85**

(51) Int. Cl.[5]: **A 01 N 61/00**, A 01 N 55/00, A 01 N 35/06, A 01 N 31/16, A 01 N 31/08, C 14 C 9/00, A 23 L 3/34 // (A01N61/00, 35:06, 31:16, 31:08),(A01N55/00, 35:06, 31:16, 31:08)

(54) **Antimikrobielles Mittel zur Behandlung von Bauwerken, Baustoffen, Textilien, Leder, Agrarprodukten und/oder Nahrungsmitteln.**

(30) Priorität: **03.02.84 SE 8400544**
**24.02.84 SE 8401008**
**24.02.84 SE 8401007**

(43) Veröffentlichungstag der Anmeldung:
**28.08.85 Patentblatt 85/35**

(45) Bekanntmachung des Hinweises auf die Patenterteilung:
**02.01.91 Patentblatt 91/01**

(84) Benannte Vertragsstaaten:
**AT BE CH DE FR GB IT LI LU NL SE**

(56) Entgegenhaltungen:
**DE-A-2 740 013**
**DE-A-2 847 400**
**FR-A- 638 976**
**FR-A- 983 882**
**GB-A- 568 174**
**GB-A-1 031 524**
**US-A-3 897 564**
**US-A-4 338 454**
**US-A-4 394 378**

**Die Akte enthält technische Angaben, die nach dem Eingang der Anmeldung eingereicht wurden und die nicht in dieser Patentschrift enthalten sind.**

(73) Patentinhaber: **PÜHRINGER, Josef, Dr.**
**Björnkällevägen 35**
**S-183 64 Täby/Stockholm (SE)**
(73) Patentinhaber: **Makes, Frantisek, Dr.**
**Backvägen 19**
**S-139 00 Värmdö (SE)**

(72) Erfinder: **PÜHRINGER, Josef, Dr.**
**Björnkällevägen 35**
**S-183 64 Täby/Stockholm (SE)**
Erfinder: **Makes, Frantisek, Dr.**
**Backvägen 19**
**S-139 00 Värmdö (SE)**

(74) Vertreter: **Kinzebach, Werner, Dr.**
**Patentanwälte Reitstötter, Kinzebach und Partner Sternwartstrasse 4 Postfach 86 06 49**
**D-8000 München 86 (DE)**

(56) Entgegenhaltungen:
**EXPERIENTIA, Band 37, Nr. 1, Januar 1981, Seiten 13, 14; Basel, CH;G.J. WRATTEN et al.: "Antimicrobial metabolites of the marine sponge Aximella polycapella."**

**EP 0 152 852 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

(56) Entgegenhaltungen:
JOURNAL OF ECONOMIC ENTOMOLOGY, Band 67, Nr. 2, April 1974, Seiten 153-158; Maryland, US;J. M. DESMARCHELIER et al.: "Toxicological effects produced by some 1,3-benzodiocoles, catechols and quinones in Culex mosquito larvae."

CHEMICAL ABSTRACTS, Band 101, Nr. 19, 5. November 1984, Seite 548, Ref.Nr. 169260z; Columbus, Ohio, USA; Y. NAKAZAWA: "Antimicrobial action of food additives against bacteria."

CHEMICAL ABSTRACTS, Band 97, Nr. 21, 21. November 1982, Seite 647, Ref.Nr. 18042ow; Columbus, Ohio, USA; Z. HUANG et al.: "Study on the prevention of mildew of soy sauce using vitamin K."

CHEMICAL ABSTRACTS, Band 94, Nr. 25, 22. Juni 1981, Seite 102, Ref.Nr. 203162t; Columbus, Ohio, US; K. YAGISHITA et al.: "Physiological activities of vitamins. I. Antimicrobial activity."

CHEMICAL ABSTRACTS, Band 88, Nr. 5, 30. Januar 1978, Seite 377, Ref.Nr. 36090k; Columbus Ohio, US; S. OSHIMA et al.: "Study of replacements for the bactericidal preservative 2-(2-furyl)-3-(5-nitro-2-furyl)acrylamide (AF-2) for dog food."

CHEMICAL ABSTRACTS, Band 83, Nr. 3, 21. Juli 1975, Seite 370, Ref.Nr. 26298s; Columbus, Ohio, USA

CHEMICAL ABSTRACTS, Band 97, Nr. 11, 13. August 1982, Seite 479, Ref.Nr. 89062v; Columbus, Ohio, US; L.R. SHCHERBANOWSKII: "Study of the antimicrobial activity of higher plants with respect to yeasts and lactic acid bacteria."

PESTICIDAL SCIENCE, Band 12, Nr. 1, Februar 1981, Seiten 1-6; Oxford, GB;C.S. James et al.: "Fungicidal activity and chemical constitution. Part XXI: The activity of substituted 1,4-naphthoquinoes and quinoline-5,8-diones against apple powdery mildew."

EXPERIENTA, Band 34, Nr. 1, Januar 1978, Seiten 51, 52; Basel, CH;R.D. TRIPATHI et al.: "A fungitoxic principle from the leaves of Lawsonia inermis Lam."

THE MERCK INDEX, 9. Ausgabe, 1976; Rahway, USA

**Beschreibung**

Die Erfindung betrifft ein antimikrobielles Mittel zur Behandlung von Bauwerken, Baustoffen, Textilien, Leder, Agrarprodukten und/oder Nahrungsmitteln. Dieses Mittel dient zur Bekämpfung von Mikroorganismen, d.h. Bakterien, Pilzen, Schimmel, Algen oder Insekten.

Bekanntlich sind Mikroorganismen bei Abbau- und Verwesungsprozessen wesentlich beteiligt. So sind die Schäden beträchtlich, die dadurch entstehen, daß Bauwerksteile unter dem Einfluß von Mikroorganismen, insbesondere Schimmelpilzen, angegriffen werden.

Aufgrund der Energiekrise sind moderne Bauten wesentlich besser wärmegedämmt als früher. Da der Luftaustausch bei derartigen Bauwerken mit der Atmosphäre nur sehr gering ist, kann die in den Bauten entstehende Feuchtigkeit nicht abtransportiert werden, sie trocknen daher schlecht. Dies führt zur verstärkten Bildung von Schimmel, der nicht nur in den Wänden, sondern auch in Möbeln und Bekleidungsstücken auftritt.

Ferner wird ein Großteil der auf der Welt produzierten Lebensmittel durch Mikroorganismen, insbesondere Schimmelpilze zerstört. So wird beispielsweise die Hälfte der Getreideproduktion der Welt durch Schimmelpilze vernichtet.

Es kommt hinzu, daß Schimmelpilze toxische Stoffe (beispielsweise Aflatoxin) bilden und an die Nahrungsmittel abgeben. Der Genuß derartiger Nahrungsmittel führt zu Vergiftungen.

Es ist bereits bekannt, zur Bekämpfung von Mikroorganismen Schwermetallsalze, chlorhaltige Verbindungen, z.B. Chlorphenole, Naphthochinone, z.B. Vitamin K, einzusetzen. Diese Verbindungen sind jedoch für Mensch und Tier äußerst schädlich. Auch andere Fungicide oder Pesticide sind sehr giftig.

Die US—A—4 338 454 beschreibt den Pentachlorphenyl-3-(triethoxysilyl)propyläther als Mittel gegen Schimmelpilze. Diese Verbindung wird insbesondere in Latex-Anstrichmitteln eingesetzt. Sie kann dabei auf Siliziumdioxiden als Träger zur Anwendung kommen.

Die DE—A—28 47 400 beschreibt Addukte von Phenolen mit Aminoorganosilanestern. Diese Addukte besitzen salzartige. Charge-Transfer-Komplex-Struktur, die durch Umsetzung von Phenolen mit Aminoorganosilanestern in wasserfreiem Medium erhalten wird. Die Addukte werden als Konservierungsmittel gegen Befall durch Pilze, Bakterien, Viren, Kleinpflanzen, Insekten und andere Mikroorganismen eingesetzt.

Gegenstand der Erfindung ist daher ein antimikrobielles Mittel zur Behandlung von Bauwerken, Baustoffen, Textilien, Leder, Agrarprodukten und/oder Nahrungsmitteln auf Basis mindestens einer Komponente a), ausgewählt unter Naphthochinon, einem Naphthochinon, das durch 1 bis 5 Hydroxygruppen, 1 bis 2 $C_1$—$C_4$-Alkyl- oder Alkoxygruppen oder in 2- und 3-Stellung durch ein Chloratom substituiert ist, oder einem Vitamin K, und mindestens einer Komponente b), ausgewählt unter einem Alkylalkoxysilan, Phenylalkoxysilan oder Tetraalkoxysilan sowie deren Hydrolysate und/oder Kondensationsprodukte mit 2 bis 10 Si-Atomen.

Die Wirkungsweise der erfindungsgemäß eingesetzten Verbindungen erklärt man sich wie folgt, wobei diese Erklärung rein hypothetisch ist.

Bei biologischen Abbau- und Verwesungsprozessen sind viele Reaktionen enzymatischer Natur. Dabei wird das abzubauende Material enzymatisch umgewandelt, so daß die Abbauprodukte von den Mikroorganismen weiterverarbeitet werden können.

Die erfindungsgemäß eingesetzten Verbindungen beeinflussen diese (enzymatischen) Prozesse, so daß diese Prozesse zum Stillstand kommen, bzw. wesentlich verlangsamt werden. Die erfindungsgemäßen Mittel inhibieren somit Enzyme.

Die erfindungsgemäßen Mittel können daher nicht nur dazu eingesetzt werden, bereits stattfindende, durch Mikroorganismen verursachte Prozesse zu stoppen bzw. zu verlangsamen, sondern auch dazu zu verhindern, daß derartige Prozesse (z.b. Schimmelbildung) überhaupt stattfinden.

Es wird ferner beispielsweise angenommen, daß die erfindungsgemäß eingesetzten Komponenten a) Cellulasen und Glucosaminasen sowie Peptidasen inhibieren, welche beim Abbau von cellulosehaltigen, chitinhaltigen oder organische, stickstoffhaltige Stoffe enthaltenden Materialien eine Rolle spielen.

Ein wichtiges Einsatzgebiet für die erfindungsgemäßen Mittel ist daher die Bau- und Baumaterialindustrie. Bei Baumaterialien werden häufig organische Materialien verwendet, die biologisch abgebaut werden können. Dazu gehört beispielsweise Holz, das gegebenenfalls schon von Schimmel befallen ist, in allen Phasen der Herstellung vom Sägewerk bis zum eingebauten Konstruktionsteil.

Ferner können auch cellulosehaltige Grundmaterialien, wie z.B. Rinde, Späne, Torf und Stroh, mit den erfindungsgemäßen Mitteln behandelt werden. Das gleiche gilt für mineralische Produkte, die entsprechende Zusätze aus organischem Material enthalten. Auch formbare Massen auf Basis von Holzprodukten (z.B. Spanplatten, Mineralplatten mit organischen Bindemitteln etc.) können behandelt werden. Das gleiche gilt für Gips, Gipsplatten und Schäume (z.B. Polyurethanschaum).

Die Behandlung kann dabei in jeder Stufe des Herstellungsverfahrens durchgeführt werden.

Auch Materialien und Konstruktionselemente, die organische, stickstoffhaltige Stoffe enthalten, insbesondere solche Materialien, welche aus Proteinen aus industriellen Abfallprodukten hergestellt werden, wie z.B. Leim und Farben, Zusatzmittel zu Mörtel (Fließmittel) und Kunststoffe können mit den erfindungsgemäßen Mitteln behandelt werden.

Ein weiteres Anwendungsgebiet ist die Konservierung von Tapeten, Papier, Stoffen, Leder, Statuen

aus Holz, Rahmen, Farben und antiken Gegenständen, beispielsweise Möbeln.

Als Naphthochinone kann man insbesondere solche nennen, die durch 1—2 Hydroxy- und/oder 1—2 $C_1$—$C_4$-Alkylgruppen substituiert sind.

Bevorzugte Naphthochinone sind: 1,4- 1,2- und 2,6-Naphthochinon, Menadion (Vitamin-$K_3$), Lawson, Juglon, Vitamin K (insbesondere Vitamin $K_1$+$K_2$), Ramentaceon, Ramenton, Chimaphilin, Phthiokol, Plumbagin, Lapachol, Alkannin, Lomation, Naphthazarin, Shikonin, Droseron, Hydroxydroseron, 2,3-Dichlor-1,4-naphthochinon und Echinochrom A. Auch entsprechende Verbindungen, die weiter substituiert sind, können erfindungsgemäß verwendet werden.

Nachstehend sind Strukturformeln einiger erfindungsgemäß einsetzbarer Verbindungen aufgeführt. Diese Beispiele lassen auch erkennen, auf welche Weise die erfindungsgemäß eingesetzten, als Komponente a) bezeichneten Verbindungen substituiert sein können.

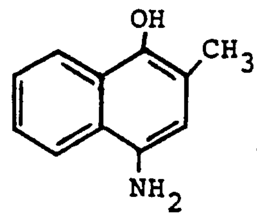

Vitamin $K_5$

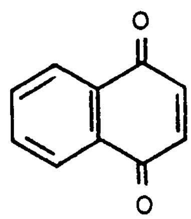

1,4 Naphthochinon
(auch 1,2 und 2,6)

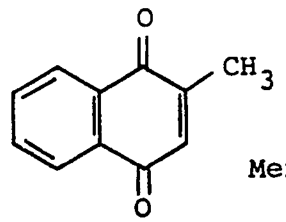

Menadion

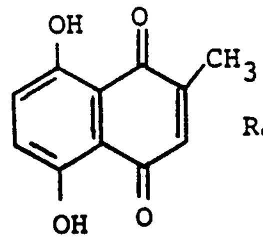

Ramenton

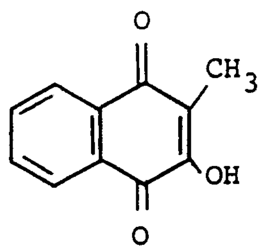

Phthiokol

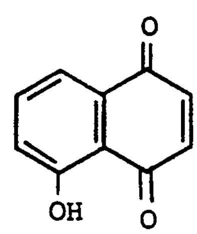

Juglon

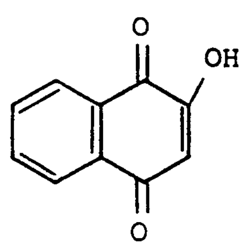

Lawson

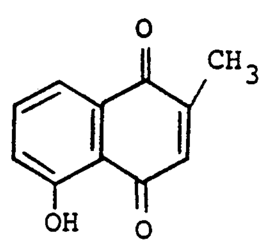

Plumbagin

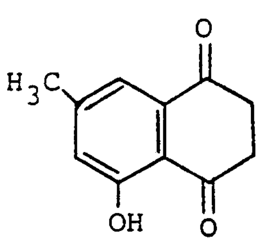

Ramentaceon

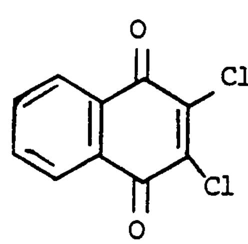

2,3—Dichlor—1,4—naphthochinon

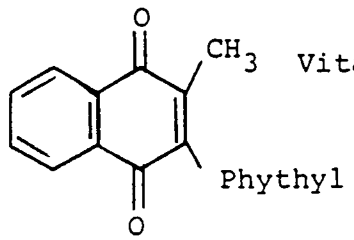

Vitamin K1

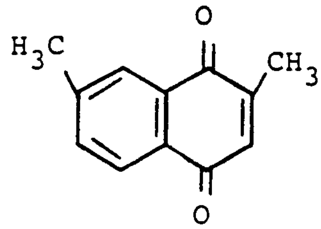

Chimaphilin

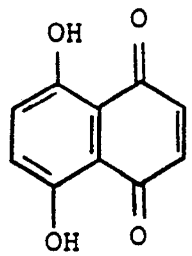

Naphthazarin

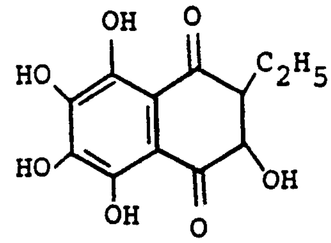

Echinochrom A

Als Naphthochinon setzt man vorzugsweise das 2-Methyl-1,4-naphthochinon ein. Für gewisse Schimmel- oder Pilzkulturen setzt man vorzugsweise 2-Methyl-1,4-naphthochinon mit 2,3-Dimethyl-1,4-naphthochinon, 2-Methyl-3-methoxy-1,4-naphthochinon und/oder 2-Methyl-3-hydroxy-1,4-naphthochinon ein. Diese Naphthochinone zeigen eine äußerst geringe Toxizität.

Diese Chinone sind insbesondere wirksam zur Bekämpfung folgender Pilzkulturen: Aspergillus, Penicillum, Rhizopus, Scopularopsis, Fomos annosus, Scopularis brevicalis, Mucur oder Hormodendrum. Die beiden letzteren werden oft auf faulendem Fleisch oder Fischen gefunden.

Vorzugsweise setzt man die erfindungsgemäß verwendeten Komponenten a) zusammen mit Ascorbinsäure, Gallusäure, Protocatechusäure, Benzoesäure, Vanillinsäure, 4-Hydroxybenzoesäure, Salicylsäure, Kaffeesäure, Cumarsäure, Abscisinsäure, Arbutin, Cumarin, Umbelliferon, Asculetin, Syringasäure oder Scopoletin ein. Diese Verbindungen setzt man vorzugsweise in Alkohol gelöst ein. Durch diese Kombination werden die Wachstumsprozesse von Mikroorganismen noch wirksamer inhibiert.

Die erfindungsgemäßen Mittel können ferner vorteilhaft in der Landwirtschaft eingesetzt werden. So können landwirtschaftliche Produkte gegen Mikroorganismen, insbesondere Schimmelpilze geschützt werden. Zu den landwirtschaftlichen Produkten gehören insbesondere Samen, Getreide, Mais, Bohnen, Früchte oder Gemüse. Die erfindungsgemäßen Mittel können nicht nur nach der Ernte der betreffenden Produkte oder bei der Lagerung, sondern auch bereits in der Wachstumsphase der landwirtschaftlichen Produkte als Pflanzenschutzmittel eingesetzt werden. Hierauf wird später noch genauer eingegangen.

Erfindungsgemäß kann man sowohl die Alkoxysilane als auch deren Hydrolysate und Kondensate einsetzen.

Die Alkoxysilane kann man in monomerer, oligomerer oder polymerer Form, insbesondere in oligomerer Form (oligomere Hydrolysate) einsetzen. Die Kondensationsprodukte der Alkoxysilane weisen vorzugsweise 2 bis 10 Si-Atome auf. Bevorzugte Alkoxysilane sind Alkyltrialkoxysilane.

Die Alkoxy- und Alkylgruppen weisen vorzugsweise jeweils 1—12, insbesondere 1—6 Kohlenstoffatome auf. Beispiele für solche Gruppen sind: Methyl, Ethyl, Propyl, Isopropyl, Butyl, Isobutyl, tert.-Butyl, Pentyl, Isopentyl, Hexyl, Octyl, Isooctyl und Decyl.

Geeignete Arylgruppen sind Phenyl- und Naphthylgruppen, welche auch substituiert sein können.

Die erfindungsgemäß eingesetzten Alkyl- und Phenylalkoxysilane umfassen solche, bei denen eine oder zwei Alkyl- oder Arylgruppen direkt an das Si-Atom gebunden sind.

Es hat sich gezeigt, daß saure Bedingungen bei Anwendung der Mittel vorteilhaft sind.

Saure Bedingungen kann man herbeiführen, indem man die erfindungsgemäßen Mittel zusammen mit den nachstehend aufgeführten Säuren einsetzt. Diese Säuren können jedoch auch getrennt eingesetzt werden.

Als Säuren kann man beispielsweise nennen: Gesättigte aliphatische Monocarbonsäuren, wie Ameisensäure, Essigsäure . . . , Palmitinsäure, Stearinsäure; ungesättigte aliphatische Monocarbonsäuren, wie Acrylsäure, Methacrylsäure; mehrfach ungesättigte Monocarbonsäuren, wie Sorbinsäure, Linolsäure, Linolensäure; Ester der genannten aliphatischen Monocarbonsäuren, wie Essigsäureethylester, Ethylformiat, Ethylbutyrat, Isoamylbutyrat; Hydroxycarbonsäuren, wie Glykolsäure, Milchsäure; aliphatische Aldehyd- und Ketocarbonsäuren, wie Acetessigsäure und deren Ester; aliphatische Dicarbonsäuren, wie Oxalsäure, Malonsäure, Bernsteinsäure, Glutarsäure, Adipinsäure; ungesättigte aliphatische Dicarbonsäuren, wie Malein- und Fumarsäure; aliphatische Hydroxytricarbonsäuren, wie Hydroxymalonsäure, Apfelsäure, Weinsäure, Zitronensäure; aliphatische Ketodicarbonsäuren, wie Oxalessigsäure; aromatische Carbonsäuren, wie Benzoesäure; Phenolcarbonsäuren, wie Salicylsäure,

Gallusäure und deren Ester; araliphatische Monocarbonsäuren, wie Phenylessigsäure, Mandelsäure; ungesättigte araliphatische Monocarbonsäuren, wie Phenylacrylsäure, Cumarinsäure; aromatische Dicarbonsäuren, wie Phthalsäure; sowie die Ester der genannten aromatischen Carbonsäuren. Oben genannte Ester führen nach Hydrolyse zu sauren Bedingungen. Die erfindungsgemäßen, Alkoxysilane enthaltenden Mittel können zur Bekämpfung von Mikroorganismen bei denselben Substraten eingesetzt werden, die zuvor im Zusammenhang mit den erfindungsgemäß eingesetzten Komponenten a) beschrieben wurden.

Es ist zwar nicht im Detail bekannt, auf welche Weise die erfindungsgemäß eingesetzten Alkoxysilane biologische Prozesse beeinflussen. Man nimmt unter anderem an, daß Alkoxysilane und insbesondere oligomere Siloxane Proteine und/oder Enzyme, die bei derartigen Prozessen eine wichtige Rolle spielen, denaturieren ("Gerben").

Die Alkoxysilane können, falls erforderlich, zusammen mit bekannten (Silanol)Polymerisations-/Kondensationskatalysatoren und/oder einem Tensid/einem Netzmittel/einem Emulgator eingesetzt werden. Als Tenside/Netzmittel können kationische, anionische und nicht-ionische Tenside eingesetzt werden.

Wie bereits früher ausgeführt, können die erfindungsgemäßen Mittel zur Bekämpfung von Mikroorganismen eingesetzt werden, welche Lebensmittel zerstören. Die erfindungsgemäßen Mittel sind somit auch zur Konservierung landwirtschaftlicher Produkte und Lebensmittel hervorragend geeignet.

Dies beruht unter anderem darauf, daß Alkoxysilane nur schwach toxisch sind. Die Kondensations- und Polymerisationsprodukte dieser Silane, die sogenannten Silikone, sind physiologisch indifferent. Silikone kommen in vielen Lebensmitteln und kosmetischen Präparaten vor.

Zur Behandlung von Lebensmitteln verwendet man vorzugsweise solche Alkylalkoxysilane, bei denen die Alkyl- und Alkoxygruppen mehr als 2 Kohlenstoffatome aufweisen. Der Grund hierfür ist folgender:

Alkylalkoxysilane hydrolysieren in Gegenwart von Wasser, wobei ein Alkohol entsteht. Verwendet man entsprechende Silane mit einer Methyl- bzw. Methoxygruppe, dann entsteht giftiger Methylalkohol. Die gegebenenfalls entstehenden höheren Alkohole, wie Ethanol usw., sind jedoch in geringen Mengen nicht-toxisch.

Behandelt man Lebensmittel mit Alkylalkoxysilanen, dann bestehen diese vorzugsweise zu einem Teile (oder insgesamt) aus Tetraalkoxysilanen, da diese Tetraalkoxysilane (Kieselsäureester) als Polymerisations- und Polykondensationskatalysatoren wirken. Sie fungieren ferner als Vernetzungsmittel. Man ist daher nicht auf die üblichen Kondensations- und Polymerisationskatalysatoren angewiesen, da die meisten dieser Katalysatoren toxisch sind und deshalb nicht für die Lebensmittelkonservierung eingesetzt werden dürfen.

Durch die Behandlung mit Alkylalkoxysilanen wird ein Lebensmittelsubstrat mit einer Polysiloxanschicht überzogen. Dadurch werden enzymatische Prozesse verhindert oder verzögert, die ablaufen müssen, damit überhaupt, zum Beispiel, eine Schimmelbildung stattfinden kann.

Die Alkylalkoxysilane und/oder Tetraalkoxysilane setzt man in einer Konzentration von 0,1 bis 5%, vorzugsweise von 0,1 bis 1%, ein, bezogen auf das Gewicht des Lebensmittels. Vorzugsweise setzt man Alkylalkoxysilane in oligomerer Form ein.

Die erfindungsgemäßen, Alkoxysilane enthaltenden Mittel eignen sich insbesondere zur Behandlung von korn-, pulver- oder faserförmigen Lebensmitteln, z.B. von Getreide, Mais, Bohnen usw. Die erfindungsgemäßen Mittel können dabei vor der Ernte, bei der Ernte, beim Transport oder während der Lagerung eingesetzt werden.

Alle erfindungsgemäßen Mittel können in fester Form, in Form von Lösungen, Emulsionen oder Suspensionen oder in Form von Aerosolen eingesetzt werden. Gegebenenfalls können sie auch als Gas eingesetzt werden.

Die erfindungsgemäßen Mittel appliziert man nach üblichen Verfahren, beispielsweise durch Streichen, Sprayen, Rollen, Tauchen, Injizieren oder Imprägnieren unter Anwendung von Über- oder Unterdruck.

Also Lösungsmittel und/oder Transportmittel kommen Wasser und organische Lösungsmittel in Frage. Dazu zählen beispielsweise aliphatische und aromatische Lösungsmittel, wie ein- oder mehrwertige Alkohole, Ketone, Ester und Ether, welche vorzugsweise wasserlöslich sind. Diese Lösungsmittel sind dem Fachmann bekannt. Auch die Emulsionen und Suspensionen stellt man auf übliche Weise her.

Die erfindungsgemäßen Mittel können auch in fester Form vorliegen. Dazu kann man die Komponenten a) und/oder die Komponenten b) auf einen Träger oder ein Trägermaterial aufbringen. Das Trägermaterial kann dabei ein Granulat, ein Pulver, Fasern oder ein Schaum sein. Der Träger kann ferner massiv oder porös sein. Als Trägermaterial kommen weiterhin übliche organische oder anorganische Materialien in Frage.

Als Beispiele für Träger bzw. Trägersubstanzen kann man nennen: Schaum, Talkum, Gips, Calciumcarbonat, Kaolin, feinkörnige, anorganische oder organische Pulver, wobei die Pulver gegebenenfalls aus Polymeren aufgebaut sind, Stoffe, Baumwolle, synthetische oder natürliche Textilfasern, Leichtbeton, Ziegel, expandierte Glimmer, pulvrige oder fasrige Holzprodukte, Steinwolle usw. Als Träger kann auch eine Folie (Plast, Papier) dienen.

So ist es beispielsweise möglich, die erfindungsgemäß eingesetzten Komponenten a) mit organischen Monomeren, die gegebenenfalls in einem Lösungsmittel gelöst sind, zu mischen. Man kann nach

Polymerisation der Monomere auf diese Weise Polymerpulver erhalten, welche die Wirkstoffe enthalten.

Bei einer bevorzugten Ausführungsform verwendet man die erfindungsgemäß eingesetzten Komponenten a) zusammen mit einer Trägersubstanz, die man dadurch erhält, daß man die Komponenten a) in den erfindungsgemäß eingesetzten Alkoxysilanen, deren Hydrolysaten oder Kondensaten, gegebenenfalls zusammen mit einem Lösungsmittel löst. Nach Verdampfen des Losungsmittels ergeben diese Silane gelförmige Stoffe, welche ohne Schwierigkeiten zu einem feinkörnigen Pulver mit äußerst großer spezifischer Oberfläche zerkleinert werden können.

Diese feinkörnigen Präparate kann man auch erhalten, indem man ein aus den genannten Alkoxysilanen hergestelltes Gel mit einer Lösung behandelt, welche die Komponente a) enthält. Als Lösungsmittel verwendet man hierbei vorzugsweise Alkohole und Alkoxysilane.

Nachdem diese Gele mit diesen Lösungen getränkt wurden, zerfallen sie oder können zu einem äußerst feinen Pulver zerkleinert werden.

Die erfindungsgemäß eingesetzten Wirkstoffe kann man auch einem porösen Träger, beispielsweise einem porösen Polymer, einverleiben, aus dem die Wirkstoffe nach und nach entweichen können. Verwendet man einen derartigen Träger in einem geschlossenen Raum, dann wird eine gewisse Menge der Wirkstoffe ständig an die Raumluft abgegeben. Dadurch verhindert man, daß Schimmel in den Räumen (beispielsweise Lagerräumen) auftritt. Dies ist insbesondere für solche Lagerräume von Interesse, in denen Leder, Kleider, Uniformen, Zelte usw. gelagert werden (beispielsweise beim Militär).

Natürlich ist es auch möglich, die erfindungsgemäßen Mittel in Form von Salben und Gelen bereitzustellen, mit denen beispielsweise Lederartikel behandelt werden.

Man kann die erfindungsgemäßen Mittel auch Leim, Kleister und Farben einverleiben. Setzt man beispielsweise derartige Farben zum Streichen von Wänden ein, die von Schimmelpilzen befallen sind, dann führt das dazu, daß die Schimmelpilze verschwinden.

Zur Bekämpfung von Schimmel in Bauwerken setzt man die erfindungsgemäßen Mittel vorzugsweise in Form eines Aerosols ein. Man kann so beispielsweise ganze Räume von Bauwerken mit den entsprechenden Aerosolen füllen. Dies wird zudem dadurch begünstigt, daß Alkoxysilane einen äußerst hohen Dampfdruck haben und somit leicht in die Gasphase übergehen und sich auch leicht mit Luft vermischen.

Derartige Alkoxysilane enthaltende Aerosole kann man auch zusammen mit Wasserdampf oder feuchtigkeitshaltiger Luft einsetzten. Dabei treten zwar Reaktionen zwischen dem Wasser und den Silanen (Hydrolyse) ein. Dies schränkt die Anwendbarkeit der Silane jedoch nicht ein. Es ist auch möglich, Hydrolysate von Silanen zusammen mit Wasserdampf oder feuchtigkeitshaltiger Luft einzusetzen.

Aerosole kann man ferner vorteilhaft zur Konservierung von Lebensmitteln einsetzen. Auch hierbei nutzt man den hohen Dampfdruck von Alkoxysilanen aus. Man kann daher derartige, Alkoxysilane enthaltende Aerosole der Luft zusetzen, welche zum Trocknen von Lebensmitteln in Silos oder ähnlichen Behältern dient.

Auf diese Weise kann die Oberfläche der Lebensmittel mit einer äußerst dünnen Schicht an Silanen bzw. Siloxanen überzogen werden. Dadurch wird nicht nur die Schimmelbildung verhindert bzw. verzögert, sondern die Fließeigenschaften der Lebensmittel werden verbessert und eine kapillare Umverteilung von gegebenenfalls auftretendem Kondenswasser wird verhindert.

Als Treibmittel für die Aerosole kann man übliche Treibmittel verwenden, beispielsweise Luft, $N_2$, $CO_2$ oder halogenierte Kohlenwasserstoffe.

Beispiel 1

Von 10 ledernen Bucheinbänden, die durch Mikroorganismen angegriffen worden waren, wurde der Schimmel von den befallenen Teilen abgekratzt und in Petrischalen gegeben. Dabei wurde jeweils eine Petrischale für einen ledernen Bucheinband eingesetzt. Auf sämtlichen Petrischalen konnten Kulturen von Aspergillus glaucus, Penicillium verrucosum, Rhizopus stolofiner, Bakterien sowie Hefepilzen gezüchtet werden. Diese Mischung von Pilzen gilt als repräsentativ für die Mikroflora, die Leder bzw. lederne Bucheinbände angreift und dort gefunden werden kann.

**Patentansprüche**

1. Antimikrobielles Mittel zur Behandlung von Bauwerken, Baustoffen, Textilien, Leder, Agrarprodukten und/oder Nahrungsmitteln auf Basis.

mindestens einer Komponente a), ausgewählt unter Naphthochinon, einem Naphthochinon, das durch 1 bis 5 Hydroxygruppen, 1 bis 2 $C_1$—$C_4$-Alkyl- oder Alkoxygruppen oder in 2- und 3-Stellung durch ein Chloratom substituiert ist, oder einem Vitamin K und

mindestens einer Komponente b), ausgewählt unter einem Alkylalkoxysilan, Phenylalkoxysilan oder Tetraalkoxysilan sowie deren Hydrolysate und/oder Kondensationsprodukte mit 2 bis 10 Si-Atomen.

2. Mittel nach Anspruch 1, dadurch gekennzeichnet, daß es als Komponente a) Menadion, Lawson, Juglon, Naphthochinon, Naphthohydroxychinon, Vitamin K (insbesondere Vitamin $K_1$+$K_2$), Ramentaceon, Ramenton, Chimaphilin, Plumbagin, Echinochrom A, 2,3-Dichlor-1,4-naphthochinon oder Gemische dieser Verbindungen enthält.

3. Mittel nach Anspruch 1, dadurch gekennzeichnet, daß es als Komponente a) 2-Methyl-1,4-naphthochinon (Menadion), 2,3-Dimethyl-1,4-naphthochinon, 2-Methyl-3-methoxy-1,4-naphthochinon oder 2-Methyl-3-hydroxy-1,4-naphthochinon oder Mischungen dieser Verbindungen enthält.

4. Mittel nach einem der vorhergehenden Ansprüche, dadurch gekennzeichnet, daß die Alkyl- und Alkoxygruppen der als Komponente b) bezeichneten Verbindungen geradkettig oder verzweigt sind und jeweils 1 bis 12 Kohlenstoffatome, insbesondere 1 bis 6 Kohlenstoffatome, aufweisen.

5. Mittel nach einem der vorhergehenden Ansprüche, dadurch gekennzeichnet, daß es als Komponente b) ein Alkyltrialkoxysilan enthält.

6. Mittel nach einem der vorhergehenden Ansprüche, dadurch gekennzeichnet, daß die als Komponente b) bezeichneten Alkoxysilane in monomerer, oligomerer oder polymerer Form vorliegen.

7. Mittel nach einem der vorhergehenden Ansprüche, dadurch gekennzeichnet, daß es zusätzlich einen (Silanol-) Polymerisations/Kondensationskatalysator und/oder ein Tensid/ein Netzmittel/einen Emulgator enthält.

8. Mittel nach einem der vorhergehenden Ansprüche in Form einer Lösung, Emulsion, Suspension, Dispersion, eines Gases, eines Aerosols oder in fester Form, wobei im letzteren Fall der Wirkstoff sich auch auf einem üblichen festen Träger, z.B. einem Pulver, Granulat, Fasermaterial oder Schaum, befinden kann.

9. Verwendung der in einem der vorhergehenden Ansprüche beschriebenen Mittel zur Bekämpfung von Mikroorganismen, Bakterien, Pilzen, Schimmel, Algen und Insekten zur Behandlung von Bauwerken, Baustoffen, Textilien, Leder, Agrarprodukten und/oder Nahrungsmitteln.

**Revendications**

1. Agent antimicrobien pour le traitement des bâtiments, des matériaux de construction, des textiles, du cuir, des produits agricoles et/ou alimentaires à base

d'au moins un composant a), choisi parmi la naphtoquinone, une naphtoquinone qui est substituée par de 1 à 5 groupes hydroxy, de 1 à 2 groupes alcoyle ou alcoxy en $C_1$ à $C_4$ ou en position 2 et 3 par un atome de chlore, ou une vitamine K et

d'au moins un composant b), choisi parmi un alcoylalcoxysilane, un phénylalcoxysilane ou un tétraalcoxysilane ainsi que leurs produits d'hydrolyse et/ou de condensation avec de 2 à 10 atomes de Si.

2. Agent selon la revendication 1, caractérisé en ce qu'il contient comme composant a) la menadione, la lawsone, la juglone, la naphtoquinone, la naphtohydroxyquinone, la vitamine K (en particulier la vitamine $K_1+K_2$), la ramentacéone, la ramentone, la chimaphiline, la plumbagine, l'échinochrome A, la 2,3-dichloro-1,4-naphtoquinone ou des mélanges de ces composés.

3. Agent selon la revendication 1, caractérisé en ce qu'il contient comme composant a) la 2-méthyl-1,4-naphtoquinone (menadione), la 2,3-diméthyl-1,4-naphtoquinone, la 2-méthyl-3-méthoxy-1,4-naphtoquinone ou la 2-méthyl-3-hydroxy-1,4-naphtoquinone ou des mélanges de ces composés.

4. Agent selon l'une des revendications précédentes, caractérisé en ce que les groupes alcoyle et alcoxy des composés mentionnés comme composant b) sont à chaîne droite ou ramifiée et présentent à chaque fois de 1 à 12, en particulier de 1 à 6 atomes de carbone.

5. Agent selon l'une des revendications précédentes, caractérisé en ce qu'il contient comme composant b) un alcoyltrialcoxysilane.

6. Agent selon l'une des revendications précédentes, caractérisé en ce que les alcoxysilanes décrits comme composant b) se présentent sous forme monomérique, oligomérique ou polymérique.

7. Agent selon l'une des revendications précédentes, caractérisé en ce qu'il contient en outre un catalyseur de polymérisation/condensation (à base de silanol) et/ou un agent tensio-actif/un agent mouillant/un émulsifiant.

8. Agent selon l'une des revendications précédentes sous la forme d'une solution, émulsion, suspension, dispersion, d'un gaz, d'un aérosol ou sous forme solide, où dans ce dernier cas la substance active peut également se trouver sur un support solide habituel, p. ex. une poudre, un granulé, une matière fibreuse ou une mousse.

9. Application des agents décrits dans l'une des revendications précédentes pour combattre les micro-organismes, les bactéries, les champignons, les moisissures, les algues et les insectes pour le traitement des bâtiments, des matériaux de construction, des textiles, du cuir, des produits agricoles et/ou alimentaires.

**Claims**

1. Antimicrobial agent for treating buildings, building materials, textiles, leather, agricultural products and/or foodstuffs, based on

at least one component a) selected from naphthoquinone, a naphthoquinone substituted by 1 to 5 hydroxy groups, 1 to 2 $C_{1-4}$ alkyl or alkoxy groups or in the 2 and 3 positions by a chlorine atom, or a vitamin K and

at least one component b) selected from an alkylalkoxysilane, phenylalkoxysilane or tetraalkoxysilane and the hydrolysates thereof and/or condensation products thereof having 2 to 10 Si atoms.

2. Agent according to claim 1, characterised in that it contains, as component a), Menadion, Lawson, Juglon, naphthoquinone, naphthohydroxyquinone, vitamin K (especially vitamin $K_1+K_2$), Ramentaceon,

Ramenton, Chimaphilin, Plumbagin, Echinochrome A, 2,3-dichloro-1,4-naphthoquinone or mixtures of these compounds.

3. Agent according to claim 1, characterised in that it contains, as component a), 2-methyl-1,4-naphthoquinone (Menadion), 2,3-dimethyl-1,4-naphthoquinone, 2-methyl-3-methoxy-1,4-naphthoquinone or 2-methyl-3-hydroxy-1,4-naphthoquinone or mixtures of these compounds.

4. Agent according to one of the preceding claims, characterised in that the alkyl and alkoxy groups of the compounds designated as component b) are straight-chained or branched and each contain 1 to 12 carbon atoms, more particularly 1 to 6 carbon atoms.

5. Agent according to one of the preceding claims, characterised in that it contains an alkyltrialkoxysilane as component b).

6. Agent according to one of the preceding claims, characterised in that the alkoxysilanes designated as component b) occur in monomeric, oligomeric or polymeric form.

7. Agent according to one of the preceding claims, characterised in that it additionally contains a (silanol) polymerisation/condensation catalyst and/or a surfactant/a wetting agent/an emulsifier.

8. Agent according to one of the preceding claims in the form of a solution, emulsion, suspension, dispersion, a gas or an aerosol or in solid form, whilst in the latter case the active substance may also be provided on a conventional solid carrier, e.g. a powder, granulated material, fibrous material or foam.

9. Use of the agents described in one of the preceding claims for combating microorganisms, bacteria, fungi, moulds, algae and insects, for treating buildings, building materials, textiles, leather, agricultural products and/or foodstuffs.